# EUROPEAN PATENT SPECIFICATION

(11) **EP 1 945 048 B1**
(45) Date of publication and mention of the grant of the patent: **31.03.2010**
(21) Application number: 06805544.1
(22) Date of filing: 01.11.2006
(51) Int. Cl.: A23L 1/314, A23B 4/22, A23L 1/325, A23L 1/317

(54) **MEAT BASED FOOD PRODUCT**
LEBENSMITTELPRODUKT AUF FLEISCHBASIS
PRODUIT ALIMENTAIRE A BASE DE VIANDE

(30) Priority: 02.11.2005 DK 200501514
(43) Date of publication of application: 23.07.2008
(73) Proprietor: Novozymes A/S, 2880 Bagsvaerd (DK)
(72) Inventor: NIELSEN, Per, Munk, DK-3400 Hilleroed (DK)
(86) International application number: PCT/DK2006/000604
(87) International publication number: WO 2007/051472

(56) References cited:
- EP-A1- 0 493 045
- WO-A2-02/00908
- US-A1- 2001 005 587

## Description

### TECHNICAL FIELD

The present invention relates to a meat based food product produced by treating meat with a phospholipase and a method for producing same.

### BACKGROUND OF THE INVENTION

Meat contains fat and in meat based meat products it is desired that the fat is stable in the product so that fat loss, e.g. during cooking, is kept at a low level, and the amount of visible free fat is reduced. In emulsified meat products emulsifiers may be added to achieve these effects. Additionally it is desired that the loss of meat juice is low and that the taste, texture and appearance is desirable.

It is well known that the fat in meat products can be stabilized in different ways. One method is to add isolated protein or protein concentrates for instance Na-caseinate, whey protein concentrate or soy protein isolate or concentrate. Special techniques have been developed to assure efficient emulsification like emulsifying the protein with the fat components in the meat recipe before the other ingredients are added and chopped. The proteins are characterized by being relatively expensive and the quantity allowed in meat products is limited. Additives like mono and di-glycerides and citric acid esters hereof is another technology often used in meat processing. They are efficient emulsifiers, but their application is often unwanted due to price or the desire of not having additives on the label of the meat product.

Dacaranhe and Terao (Dacaranhe, CD and Terao, J: Effect of cabbage phospholipase D treatment on the oxidative stability of beef homogenate and egg yolk phosphatidylcholine liposomes. Journal of Food Science 67 (2002) 2619-2624) and Chung-Wang et al. (Chung-Wang, YJ et al.: Reduced oxidation of fresh pork in the presence of exogenous hydrolases and bacteria at 2°C. Journal of Applied Microbiology 82 (1997) 317-324) have shown that phospholipase treatment increases the oxidative stability of raw meat.

### SUMMARY OF THE INVENTION

The inventors have found that a meat based food product produced from meat treated with a phospholipase may have improved properties compared to a similar meat based food product produced from similar meat not treated with a phospholipase. Consequently, the present invention relates to a method for producing a meat based food product comprising:
a) contacting meat with a phospholipase; b) heating the phospholipase treated meat; and c) producing a food product from the phospholipase treated meat; wherein step b) is conducted before, during or after step c). In further aspects the invention relates to use of a phospholipase for producing a meat based food product, and to a meat based food product obtainable by the method of the invention.

### DETAILED DESCRIPTION OF THE INVENTION

A meat based food product according to the invention is any product based on meat and suitable for use as food for humans or animals. In one embodiment of the invention a meat based food product is a feed product for feeding animals, e.g. a pet food product. In another embodiment a meat based food product is a snack product.

### Meat

Meat according to the invention is any kind of tissue derived from any kind of animal. Meat according to the invention may be tissue comprising muscle fibres derived from an animal. In one embodiment of the invention, meat is animal muscle, e.g. whole animal muscle or pieces of meat cut from animal muscle. In another embodiment meat according to the invention comprises inner organs of an animal, such as e.g. heart, liver, kidney, spleen, .thymus, and brain. Meat may be ground or minced or cut into smaller pieces by any other appropriate way known in the art. Meat according to the invention may be derived from any kind of animal, e.g. from cow, pig, lamb, sheep, goat, chicken, hen, turkey, ostrich, pheasant, deer, elk, reindeer, buffalo, bison, antelope, camel, kangaroo; any kind of fish, e.g. sprat, cod, haddock, tuna, sea eel, salmon, herring, sardine, mackerel, horse mackerel, saury, round herring, pollack, flatfish, anchovy, pilchard, blue whiting, pacific whithing, trout, catfish, bass, capelin, marlin, red snapper, Norway pout and/or hake; any kind of shellfish, such as e.g. clam, mussel, scallop, cockle, periwinkle, snail, oyster, shrimp, lobster, langoustine, crab, crayfish, cuttlefish, squid, and/or octopus. In one embodiment of the invention the meat is beef, pork, chicken, and/or turkey. In another embodiment the meat is fish meat.

A meat based food product according to the invention is any food product based on meat. A meat based food product may comprise non-meat ingredients such as e.g. water, salt, flour, milk protein, vegetable protein, starch, hydrolysed protein, phosphate, acid, and/or spices. A meat based food product according to the invention may comprise at least 30% (weight/weight) meat, such as at least 50%, at least 60%, or at least 70% meat.

In one embodiment a meat based food product is a processed meat product, such as e.g. a sausage, bologna, meat loaf, comminuted meat product, ground meat, bacon, polony, salami, or pate. A processed meat product may further comprise e.g. salts, spices, milk protein, vegetable ingredients, colouring agents, and/or texturising agents. A processed meat product may e.g. be an emulsified meat product, manufactured from a meat based emulsion, such as e.g. mortadella, bologna, pepperoni, liver sausage, chicken sausage, wiener, frankfurter, luncheon meat, meat pate. The meat based emulsion may be cooked, sterilized or baked, e.g. in a baking form or after being filled into casing of e.g. plastic, collagen, cellulose, or natural casing. A processed meat product may also be a restructured meat product, such as e.g. restructured ham. A meat product of the invention may undergo processing steps such as e.g. salting, e.g. dry salting; curing, e.g. brine curing; drying; smoking; fermentation; cooking; canning; retorting; slicing; and/or shredding.

### Method for producing a meat based food product

A meat based food product according to the invention may be produced by contacting meat with a phospholipase and producing a meat based food product from the treated meat. The meat will usually be raw when being contacted with a phospholipase, but may also e.g. be heat treated, precooked, or irradiated before contact with a phospholipase. The meat may also have been frozen before contact with a phospholipase. Contacting meat with a phospholipase may be achieved by adding a phospholipase, e.g. a purified phospholipase, to meat. Contacting meat with a phospholipase may be achieved by mixing meat, e.g. pieces of meat, minced meat, or a meat based emulsion, with a phospholipase and, where applicable, other ingredients used to form the meat based food product by any method known in the art. Before contact with the meat, a phospholipase may be mixed with other ingredients, e.g. to form a marinade or pickling liquid, such as e.g. water, salt, flour, milk protein, vegetable protein, starch, hydrolysed protein, phosphate, acid, and/or spices. The amount of a phospholipase in a marinade may be adjusted so as to achieve the desired final amount of a phospholipase in the meat based food product. Contacting meat, e.g. whole animal muscle or pieces of animal muscle, with a phospholipase may be achieved by marinating and/or tumbling the meat with a marinade comprising a phospholipase. If the meat product is a processed meat product, e.g. an emulsified meat product, a phospholipase may e.g. be mixed into a meat based emulsion, or into any other form of meat based mixture used to form the processed meat product. In one embodiment of the invention a phospholipase is added to a marinade or a pickling liquid. A phospholipase may be added to meat by injection and/or pumping of a liquid comprising a phospholipase into the meat by any method known in the art for injecting and/or pumping a liquid into meat. A meat based food product of the invention may be pieces of meat that have been contacted with a phospholipase and packed.

In the method of the invention meat is heat treated after being contacted with a phospholipase. Heating may be performed by any method known in the art. Heating will usually be performed as an integrated part of the production of a meat based food product, e.g. by cooking, but may also be performed before the processing steps needed to form a meat based food product, or after a meat based food product has been formed. Heating may thus be performed before, during or after the production of a meat based food product. A meat based food product according to the invention may be cooked after contacting meat with a phospholipase and allowing the phospholipase to hydrolyse phospholipids. Cooking may be performed by any method known in the art such as e.g. in a smoking cabinet, in boiling water, in a water bath, in an oven, by microwave heating, by grilling, by pressure cooking, by retorting, and/or by frying. In one embodiment of the invention the meat based food product is heated, e.g. to a temperature in the range 50-140°C, such as 60-120°C, 60-100°C, or 70-100°C. In another embodiment the meat based food product is heated to a temperature and for a time sufficient to inactivate the phospholipase. In a still further embodiment the phospholipase treated meat is heated to at least 50°C, such as at least 60°C, or at least 70°C.

A meat based food product of the invention may be used for direct consumption or it may undergo further processing before consumption. A meat based food product of the invention may be used as a raw material or ingredient for production of other food products.

### Enzymes to be used in the process of the invention

Phospholipids, such as e.g. lecithin or phosphatidylcholine, consist of glycerol esterified with two fatty acids in an outer (sn-1) and the middle (sn-2) positions and esterified with phosphoric acid in the third position; the phosphoric acid, in turn, may be esterified to an amino-alcohol. Phospholipases are enzymes which participate in the hydrolysis of phospholipids. Several types of phospholipase activity can be distinguished, including phospholipases A₁ and A₂ (commonly referred to as phospholipase A) which hydrolyze one fatty acyl group (in the sn-1 and sn-2 position, respectively) to form lysophospholipid. Phospholipase B hydrolyzes the remaining fatty acyl group in lysophospholipid.

The enzyme used in the process of the present invention include a phospholipase, such as, phospholipase A₁ or phospholipase A₂. In the process of the invention the phospholipase treatment may be provided by one or more phospholipase, such as both type A₁ and A₂.

Phospholipase A₁ is defined according to standard enzyme EC-classification as EC 3.1.1.32.
Official Name: Phospholipase A₁.
Reaction catalyzed:
phosphatidylcholine + water <=> 2-acylglycerophosphocholine + a fatty acid anion
Comment: has a much broader specificity than EC 3.1.1.4.

Phospholipase A₂ is defined according to standard enzyme EC-classification as EC 3.1.1.4
Official Name: phospholipase A₂.
Alternative Names:phosphatidylcholine 2-acylhydrolase.
lecithinase a; phosphatidase; or phosphatidolipase.
Reaction catalysed:
phosphatidylcholine + water <=> 1-acylglycerophosphocholine + a fatty acid anion
Comment: also acts on phosphatidylethanolamine, choline plasmalogen and phosphatides, removing the fatty acid attached to the 2-position.

Phospholipase B is defined according to standard enzyme EC-classification as EC 3.1.1.5.
Official Name: lysophospholipase.
Alternative Names: lecithinase b; lysolecithinase;
phospholipase B; or PLB.
Reaction catalysed:
2-lysophosphatidylcholine + water <> glycerophosphocholine + a fatty acid anion

Phospholipase C is defined according to standard enzyme EC-classification as EC 3.1.4.3. Phospholipase C hydrolyses the phosphate bond on phosphatidylcholine and other glycerophospholipids, e.g. phosphatidylethanolamine, yielding diacylglycerol; this enzyme will also hydrolyse the phosphate bonds of sphingomyelin, cardiolipin, choline plasmalogen and ceramide phospholipids.
Reaction with phosphatidylcholine:
phosphatidylcholine + water <=> 1,2-diacylglycerol + choline phosphate
Phospholipase D is defined according to standard enzyme EC-classification as EC 3.1.4.4. Phospholipase D hydrolyses the phosphate bonds of phospholipids and sphingomyelin to give the corresponding phosphatidic acid.
Reaction with phosphatidylcholine:
A phosphatidylcholine + water <=> choline + a phosphatidate

### Phospholipase A

Phospholipase A activity may be provided by enzymes having other activities as well, such as e.g. a lipase with phospholipase A activity. The phospholipase A activity may e.g. be from a lipase with phospholipase side activity. In other embodiments of the invention phospholipase A enzyme activity is provided by an enzyme having essentially only phospholipase A activity and wherein the phospholipase A enzyme activity is not a side activity.

Phospholipase A may be of any origin, e.g. of animal origin (such as, e.g. mammalian), e.g. from pancreas (e.g. bovine or porcine pancreas), or snake venom or bee venom. Alternatively, phospholipase A may be of microbial origin, e.g. from filamentous fungi, yeast or bacteria, such as the genus or species Aspergillus, e.g. A. niger; Dictyostelium, e.g. D. discoideum; Mucor, e.g. M. javanicus, M. mucedo, M. subtilissimus; Neurospora, e.g. N. crassa; Rhizomucor, e.g. R. pusillus; Rhizopus, e.g. R. arrhizus, R. japonicus, R. stolonifer; Sclerotinia, e.g. S. libertiana; Trichophyton, e.g. T. rubrum; Whetzelinia, e.g. W. sclerotiorum; Bacillus, e.g. B. megaterium, B. subtilis; Citrobacter, e.g. C. freundii; Enterobacter, e.g. E. aerogenes, E. cloacae Edwardsiella, E. tarda; Erwinia, e.g. E. herbicola; Escherichia, e.g. E. coli; Klebsiella, e.g. K. pneumoniae; Proteus, e.g. P. vulgaris; Providencia, e.g. P. stuartii; Salmonella, e.g. S. typhimurium; Serratia, e.g. S. liquefasciens, S. marcescens; Shigella, e.g. S. flexneri; Streptomyces, e.g. S. violaceoruber; Yersinia, e.g. Y. enterocolitica. Thus, phospholipase A may be fungal, e.g. from the class Pyrenomycetes, such as the genus Fusarium, such as a strain of F. culmorum, F. heterosporum, F. solani, or a strain of F. oxysporum. Phospholipase A may also be from a filamentous fungus strain within the genus Aspergillus, such as a strain of Aspergillus awamori, Aspergillus foetidus, Aspergillus japonicus, Aspergillus niger or Aspergillus oryzae. A preferred phospholipase A is derived from a strain of Fusarium, particularly F. venenatum or F. oxysporum, e.g. from strain DSM 2672 as described in WO 98/26057, especially described in claim 36 and SEQ ID NO. 2 of WO 98/26057. Another preferred phospholipase A is PLA2 from Streptomyces, such as e.g. PLA2 from S. violaceoruber. In further embodiments, the phospholipase is a phospholipase as disclosed in WO 00/32758 (Novozymes A/S, Denmark).

The activity of a phospholipase type A may e.g. be expressed in Lecitase Units (LEU). Phospholipase activity in Lecitase Units is measured relative to a phospholipase standard using lecithin as a substrate. Phospholipase A catalyzes the hydrolysis of lecithin to lysolecithin and a free fatty acid. The liberated fatty acid is titrated with 0.1 N sodium hydroxide under standard conditions (pH 8.00; 40.00°C ± 0.5). The activity of phospholipase A is determined as the rate of sodium hydroxide consumption during neutralization of the fatty acid and is expressed in Lecitase units (LEU) relative to a Lecitase (phospholipase) standard (available from Novozymes A/S, Bagsværd, Denmark). 1 LEU is defined as the amount of enzyme that under standard conditions (pH 8.00; 40.00°C ±0.5) results in the same rate of sodium hydroxide consumption (µmol/min) as the Lecitase standard diluted to a nominal activity of 1 LEU/g.

### Phospholipase B

The term "phospholipase B" used herein in connection with an enzyme of the invention is intended to cover an enzyme with phospholipase B activity.

The phospholipase B activity may be provided by enzymes having other activities as well, such as e.g. a lipase with phospholipase B activity. The phospholipase B activity may e.g. be from a lipase with phospholipase B side activity. In other embodiments of the invention the phospholipase B enzyme activity is provided by an enzyme having essentially only phospholipase B activity and wherein the phospholipase B enzyme activity is not a side activity. In one embodiment of the invention, the phospholipase B is not a lipase with phospholipase B side activity as defined in WO 98/26057.

The phospholipase B may be of any origin, e.g. of animal origin (such as, e.g. mammalian), e.g. from liver (e.g. rat liver). Alternatively, the phospholipase B may be of microbial origin, e.g. from filamentous fungi, yeasts or bacteria, such as the genus or species Aspergillus, e.g. A. foetidus, A. fumigatus, A. nidulans, A. niger, A. oryzae; Botrytis, e.g. B. cinerea; Candida, e.g. C. albicans; Cryptococcus, e.g. C. neoformans, Escherichia, e.g. E. coli, Fusarium, e.g. F. sporotrichioides, F. venenatum, F. verticillioides; Hyphozyma; Kluyveromyces, e.g. K. lactis; Magnaporte, e.g. M. grisea; Metarhizium, e.g. M. anisopliae; Mycosphaerella, e.g. M. graminicola; Neurospora, e.g. N. crassa; Penicillium, e.g. P. notatum; Saccharomyces, e.g. S. cerevisiae; Schizosaccharomyces, e.g. S. pombe; Torulaspora, e.g. T. delbrueckii; Vibrio; e.g. V. cholerae. A preferred phospholipase B is derived from a strain of Aspergillus, particularly phospholipase LLPL-1. or LLPL-2 from A. niger, e.g. as contained in the Escherichia coli clones DSM 13003 or DSM 13004, or phospholipase LLPL-1 or LLPL-2 from A. oryzae, e.g. as contained in the E. coli clones DSM 13082 or DSM 13083 as described in

WO 01/27251, especially described in claim 1 and SEQ ID NOs. 2, 4, 6 or 8 of WO 01/27251.

### Phospholipase C

The phospholipase C activity may be provided by enzymes having other activities as well, such as e.g. a lipase with phospholipase C activity or a phosphatase with phospholipase C activity The phospholipase C activity may e.g. be from a lipase with phospholipase C side activity. In other embodiments of the invention the phospholipase C enzyme activity is provided by an enzyme having essentially only phospholipase C activity and wherein the phospholipase C enzyme activity is not a side activity.

The phospholipase C may be of any origin, e.g. of animal origin, such as mammalian origin, of plant origin, or of microbial origin, such as fungal origin or bacterial origin, such as from a strain of Mycobacterium, e.g. M. tuberculosis or M. bovis; a strain of Bacillus, e.g. B. cereus; a strain of Clostridium, e.g. C. bifermentans, C. haemolyticum, C. novyi, C. sordellii, or C. perfringens; a strain of Listeria, e.g. L. monocytogenes; a strain of Pseudomonas, e.g. P. aeruginosa; or a strain of Staphylococcus, e.g. S. aureus; or a strain of Burkholderia, e.g. B. pseudomallei.

### Phospholipase D

The phospholipase D activity may be provided by enzymes having other activities as well, such as e.g. a lipase with phospholipase D activity, a phosphatase with phospholipase D activity, or a cholinesterase with phospholipase D activity. The phospholipase D activity may e.g. be from a lipase with phospholipase D side activity. In other embodiments of the invention the phospholipase D enzyme activity is provided by an enzyme having essentially only phospholipase D activity and wherein the phospholipase D enzyme activity is not a side activity.

The phospholipase D may be of any origin, e.g. of animal origin, such as mammalian origin, e.g. from mouse, rat, or Chinese hamster; of plant origin, e.g. from cabbage, maize, rice, castor bean, tobacco, cowpea, or Arabidopsis thaliana; or of microbial origin, such as of bacterial origin, e.g. from a strain of Corynebacterium, e.g. C. pseudotuberculosis, C. ulcerans, or C. haemolyticum; or fungal origin, such as e.g. from a strain of Streptomyces, e.g. S. antibioticus or S. chromofuscus; a strain of Trichoderma, e.g. T. reesei; a strain of Saccharomyces, e.g. S. cerevisiae; or a strain of Aspergillus, e.g. A. oryzae, A. niger, A. nidulans or A. fumigatus.

### Enzyme sources and formulation

The phospholipase used in the process of the invention may be derived or obtainable from any of the sources mentioned herein. The term "derived" means in this context that the enzyme may have been isolated from an organism where it is present natively, i.e. the identity of the amino acid sequence of the enzyme are identical to a native enzyme. The term "derived" also means that the enzymes may have been produced recombinantly in a host organism, the recombinant produced enzyme having either an identity identical to a native enzyme or having a modified amino acid sequence, e.g. having one or more amino acids which are deleted, inserted and/or substituted, i.e. a recombinantly produced enzyme which is a mutant and/or a fragment of a native amino acid sequence. Within the meaning of a native enzyme are included natural variants. Furthermore, the term "derived" includes enzymes produced synthetically by e.g. peptide synthesis. The term "derived" also encompasses enzymes which have been modified e.g. by glycosylation, phosphorylation etc., whether in vivo or in vitro. The term "obtainable" in this context means that the enzyme has an amino acid sequence identical to a native enzyme. The term encompasses an enzyme that has been isolated from an organism where it is present natively, or one in which it has been expressed recombinantly in the same type of organism or another, or enzymes produced synthetically by e.g. peptide synthesis. With respect to recombinantly produced enzyme the terms "obtainable" and "derived" refers to the identity of the enzyme and not the identity of the host organism in which it is produced recombinantly.

Accordingly, the phospholipase may be obtained from a microorganism by use of any suitable technique. For instance, a phospholipase enzyme preparation may be obtained by fermentation of a suitable microorganism and subsequent isolation of a phospholipase preparation from the resulting fermented broth or microorganism by methods known in the art. The phospholipase may also be obtained by use of recombinant DNA techniques. Such method normally comprises cultivation of a host cell transformed with a recombinant DNA vector comprising a DNA sequence encoding the phospholipase in question and the DNA sequence being operationally linked with an appropriate expression signal such that it is capable of expressing the phospholipase in a culture medium under conditions permitting the expression of the enzyme and recovering the enzyme from the culture. The DNA sequence may also be incorporated into the genome of the host cell. The DNA sequence may be of genomic, cDNA or synthetic origin or any combinations of these, and may be isolated or synthesized in accordance with methods known in the art.

Suitable phospholipases are available commercially. Examples of enzymes for practical use are e.g. Lecitase® (Novozymes A/S, Bagsværd, Denmark) or YieldMAX® (Novozymes A/S, Bagsværd, Denmark and Chr. Hansen A/S, Hørsholm, Denmark). A suitable phospholipase B is e.g. Aspergillus niger phospholipase LLPL-2 that can be produced recombinantly in A. niger as described in WO 01/27251.

In the process of the invention the phospholipase may be purified. The term "purified" as used herein covers phospholipase enzyme protein free from components from the organism from which it is derived. The term "purified" also covers phospholipase enzyme protein free from components from the native organism from which it is obtained, this is also termed "essentially pure" phospholipase and may be particularly relevant for phospholipases which are naturally occurring and which have not been modified genetically, such as by deletion, substitution or insertion of one or more amino acid residues.

Accordingly, the phospholipase may be purified, viz. only minor amounts of other proteins being present. The expression "other proteins" relate in particular to other enzymes. The term "purified" as used herein also refers to removal of other components, particularly other proteins and most particularly other enzymes present in the cell of origin of the phospholipase. The phospholipase may be "substantially pure", i.e. free from other components from the organism in which it is produced, i.e., e.g., a host organism for recombinantly produced phospholipase. Preferably, the enzymes are at least 75% (w/w) pure, more preferably at least 80%, 85%, 90% or even at least 95% pure. In a still more preferred embodiment the phospholipase is an at least 98% pure enzyme protein preparation.

The terms "phospholipase" includes whatever auxiliary compounds that may be necessary for the catalytic activity of the enzyme, such as, e.g. an appropriate acceptor or cofactor, which may or may not be naturally present in the reaction system.

The phospholipase may be in any form suited for the use in question, such as e.g. in the form of a dry powder or granulate, a non-dusting granulate, a liquid, a stabilized liquid, or a protected enzyme. Granulates may be produced, e.g. as disclosed in US 4,106,991 and US 4,661,452, and may optionally be coated by methods known in the art. Liquid enzyme preparations may, for instance, be stabilized by adding stabilizers such as a sugar, a sugar alcohol or another polyol, lactic acid or another organic acid according to established methods. Protected enzymes may be prepared according to the method disclosed in EP 238,216.

By the process of the invention, the phospholipids of the meat may be modified by hydrolysis of at least 5%, such as at least 10%, at least 20%, at least 30%, or at least 50% of the total amount of phosphatidylcholine plus phosphatidylethanolamine, as a result of treating the meat with phospholipase. In one embodiment, at least 5%, such as at least 10%, at least 20%, at least 30%, or at least 50% of phospholipids in the meat may be hydrolysed as a result of the phospholipase treatment.

By the process of the present invention the phospholipid content in the obtained meat based food product may be less than 90%, such as e.g. less than 80%, e.g. less than 60% or less than 50% of the total content of phospholipid present in the meat before contacting the meat with a phospholipase. The phospholipid content may be measured by any method known by the skilled person, e.g. by HPLC.

The amount of phospholipase to be used in the method of the invention may depend on the activity of the specific phospholipase on the phospholipids present in the meat under the specific treatment conditions. The amount of phospholipase may be determined by the skilled person by methods known in the art for optimising enzymatic reactions, e.g. by determining the amount of phospholipase required to achieve the desired degree of hydrolysis of meat phospholipids and/or to achieve the desired effect on the properties of the meat based food product.

When a phospholipase A is used the amount of phospholipase may e.g. be between 0.1 and 50 LEU per gram of fat, such as between 0.5 and 25, or between 1 and 10 LEU per gram of fat.

A meat based food product produced by the method of the invention may have improved properties compared to a similar meat based food product produced without phospholipase treatment of meat, e.g. the meat product according to the invention may have improved fat stability, a lower amount of visible fat, increased water binding, and/or improved textural properties, e.g. increased firmness.

In one embodiment the present invention relates to use of a phospholipase for producing a meat based food product, and in a further embodiment the invention relates to a meat based food product obtained, or obtainable, by the method of the invention.

### EXAMPLES

### Example 1

200 g of a meat product was produced from the following ingredients (% weight/weight):
60 % Minced beef meat containing 18 % fat
1.8% NaCl
0.4 % Sodiumtripolyphosphate
37.8 % Water

Beef meat with a temperature of 5C and NaCl was mixed for 1 minute in a food processor, water with a temperature of 5C and phosphate was added and mixing continued for 3 minutes. 100 g was transferred to a container for cooking. Cooking was performed by heating the mixture in the container to 40C and keeping this temperature for 30 minutes, the mixture in the container was then placed in a water bath at 90C and left until the centre temperature had reached 75C. The product was cooled to 5C and evaluated the following day.

One control sample was made without addition of phospholipase.
Sample 1 was made with addition of 500 LEU (Lecitase Units) per kg meat of a mammalian phospholipase (Lecitase 10L, Novozymes A/S, Bagsværd, Denmark).
Sample 2 was made with addition of 500 LEU (Lecitase Units) per kg meat of a fungal phospholipase (Phospholipase A1 from *Fusarium venenatum,* Novozymes A/S, Bagsværd, Denmark).
For both sample 1 and 2 the phospholipase was added to the meat together with NaCl.

Results are shown in table 1.

**Table 1**

| | Fat appearance | Meat juice appearance |
|---|---|---|
| Control sample | Large fat particles | Light brown |
| Sample 1 | Few large and many small fat particles compared to control sample | Brown |
| Sample 2 | Small fat particles compared to control sample | Medium brown |

### Example 2

Luncheon meat was produced at laboratory scale with composition as described in table 2. The pork meat and fat was dized (approximately 3 x 3 cm). Nitrite salt was added to the meat cubes. The meat and fat was ground separately through a 3 mm orifice plate using a mincing machine (model X70, Hermann Scharfen GmbH & Co, Witten, Germany) and left overnight at a cold storage temperature of 4°C.

The meat was mixed in a MADO Electronic table-top cutter MTK 560 (Pfeiffer GmbH, Dornhan, Germany) with one third of the crushed ice and all the phosphate. Then half of the remaining crushed ice (one third of the total amount) and the salt were added together with enzyme (Phopsholipase A₁ (YieldMAX, Chr. Hansen, Denmark) and phospholipase A₂ (Lecitase 10L, Novozymes Denmark), dosage (LEU/g fat) is shown in table 3). The remaining crushed ice and the dry ingredients (spices, maltodextrin, and ascorbate) were added and chopped until the mixture reached a temperature of 10°C. The fat was added and chopped until the mixture had reached a temperature of 12-14°C.

After ended mixing, the meat emulsion was vacuumed 9x15 seconds in a Komet PlusVac 24 (Komet Maschinenfabrik GmbH, Plochingen, Germany) prior to canning. Then the cans were filled with meat batter leaving a 5 % head space at the top of each can. Prior to sealing, the cans were vacuumed an additional nine times. The cans were sealed using a Seaming V10 Automat (Lanico, Germany) and heated in 100°C warm water for 95 minutes.

**Table 2. Composition of luncheon meat**

| **Ingredients** | Amount (%) |
|---|---|
| Pork meat 5.3% fat | 51.40 % |
| Crushed ice | 24.40 % |
| Pork fat | 21.83% |
| Nitrite salt | 1.00 % |
| Salt | 0.50 % |
| Spices | 0.50 % |
| Na-tripolyphosphate | 0.37 % |

Amount of hydrolysis of phosphatidylcholine (PC) and phosphatidylethanolamine (PE), was determined as percentage reduction of PC content and PE content, respectively, compared to control samples. PC and PE was determined by HPLC in the following way: The lipid fraction of homogenized luncheon meat sample was extracted in 30 ml of chloroform/methanol (2:1 v/v) and separated by centrifugation for 30 min at 3000 rpm at 4°C.

The organic solvent phase with the lipids was transferred quantitatively to an evaporation flask and dried at 45-48°C. The total lipid extract was re-dissolved in 2.5 ml chloroform prior to lipid class separation. A solid phase extraction NH₂ column (BondElut NH₂, Varian Incorporated, CA, USA) was cleaned by adding 2 x 2 ml hexane and emptied with vacuum.
Then the sample was added to the column and led through with vacuum. To remove the neutral lipids, 2 x 2 ml chloroform/2-propanol (2:1 v/v) was added. The free fatty acids were removed by adding 2 x 2 ml a solution of 2 % acetic acid in ether. Methanol (2 x 2 ml) was added to the column and the lipid fraction containing the (lyso-)phospholipids was collected in a glass and evaporated with nitrogen.

Two eluents were prepared for the gradient-driven separation. Eluent A consisted of a mixture of methanol, acetic acid, triethylamine, and hexane (897:18:15:70 v/v/v/v) and eluent B was a mixture of acetone, acetic acid, triethylamine, and hexane (897:18:15:70 v/v/v/v).

A mixed standard sample, containing 1425 microliter eluent B and 37.5 microliter of synthetic phosphatidylethanolamine and phosphatidylcholine, respectively, was prepared.

The phospholipid extract was re-suspended in 600 microliter eluent B and filtered through a LC 13 mm syringe filter with a 0.45 micrometer PVDF membrane (PALL Gelman Laboratory Acrodisc ®, NY, USA) into a HPLC vial.

A Dionex UCI-50 high performance liquid chromatograph (Dionex Softron GmbH, Germering, Germany) was used to separate and quantify the individual (lyso-) phospholipid species. The chromatograph contained an ASI-100 automated sample injector (Dionex, Germering, Germany) and a P680 HPLC pump (Dionex, Germering, Germany), a bonded silica column (LiChrospher® 100 Diol, 5 micrometer, serial no. 415614, Merck KgaA, Darmstadt, Germany), and an Alltech ELSD 2000 evaporative light scattering detector (Alltech Associates Inc., IL, USA).

Texture was measured by penetration force with a flat-ended cylindrical stainless steel plunger with a diameter of 3.5 mm. The plunger was attached to a 100 N static load cell connected to the crosshead of the Instron 4301 machine (Instron Limited, Buck-inghamshire, England). The crosshead speed was operating at 50 mm/min and the force-distance deformation curves were recorded using the Series IX Software (M12-13984-EN, Instron Limited, Buckinghamshire, England) and the maximum penetration force determined. Three penetrations were performed in each can of luncheon meat tested. The tests were carried out on samples at 8°C and 23°C, respectively. The average maximum penetration force measured for each sample is summarized in table 3.

**Table 3. Enzyme type and dosage (LEU/g fat), degree of hydrolysis of phosphatidylcholine (PC) and phosphatidylethanolamine (PE) (%), and maximum penetration force at 8°C and 23°C (N) in final meat samples.**

| **Phospholipase type** | **Control** | **A₁** | **A₁** | **A₁** | **A₂** | **A₂** | **A₂** |
|---|---|---|---|---|---|---|---|
| **Enzyme dosage (LEU/g fat)** | **0** | **30** | **60** | **120** | **10** | **20** | **40** |
| | | | | | | | |
| **Hydrolysis of PE (%)** | 0.0 | 6.1 | 18.9 | 12.6 | 16.4 | 2.6 | 20.1 |
| **Hydrolysis of PC (%)** | 0.0 | 28.2 | 52.8 | 53.3 | 50.1 | 15.7 | 39.2 |
| | | | | | | | |
| **Max penetration force, 8°C (N)** | 6.8 | 6.0 | 6.2 | 7.7 | 6.4 | 7.8 | 7.3 |
| **Max. penetration force, 23°C (N)** | 3.8 | 4.1 | 4.1 | 6.1 | 4.1 | 4.5 | 4.7 |

## Claims

1. A method for producing a meat based food product comprising:
a) contacting meat with a phospholipase A₁ or phospholipase A₂;
b) heating the phospholipase treated meat; and
c) producing a food product from the phospholipase treated meat;
wherein step b) is conducted before, during or after step c).

2. The method of claim 1 wherein the phospholipase treated meat is heated to a temperature and for a time sufficient to inactivate the phospholipase.

3. The method of claim 1 wherein the phospholipase treated meat is heated to at least 50°C.

4. The method of claim 3 wherein the phospholipase treated meat is heated to a temperature in the range 50-140°C.

5. The method of any of the preceding claims wherein the meat to be contacted with a phospholipase is minced meat.

6. The method of any of the preceding claims wherein the food product is an emulsified meat product.

7. The method of any of the preceding claims wherein the food product comprises at least 30% meat.

8. The method of any of the preceding claims wherein the phospholipase is a purified phospholipase.

9. The method of any of the preceding claims wherein the phospholipids of the phospholipase treated meat have been modified by hydrolysis of at least 5% of the total amount of phosphatidylcholine plus phosphatidylethanolamine.

10. The method of any of the preceding claims wherein the phospholipids of the phospholipase treated meat have been modified by hydrolysis of at least 20% of the total amount of phosphatidylcholine plus phosphatidylethanolamine.

## Patentansprüche

1. Verfahren zum Herstellen eines fleischbasierten Nahrungsmittelproduktes, umfassend:
a) In-Kontakt-Bringen von Fleisch mit einer Phospholipase A₁ oder Phospholipase A₂;
b) Erhitzen des phospholipasebehandelten Fleischs; und
c) Herstellen eines Nahrungsmittelprodukts aus dem phospholipasebehandelten Fleisch; wobei Schritt b) vor, während oder nach Schritt c) durchgeführt wird.

2. Verfahren nach Anspruch 1, wobei das phospholipasebehandelte Fleisch auf eine Temperatur und für eine Zeit erhitzt wird, die ausreicht, um die Phospholipase zu inaktivieren,

3. Verfahren nach Anspruch 1, wobei das phospholipasebehandelte Fleisch auf mindestens 50 °C erhitzt wird.

4. Verfahren nach Anspruch 3, wobei das phospholipasebehandelte Fleisch auf eine Temperatur in dem Bereich 50-140 °C erhitzt wird.

5. Verfahren nach einem beliebigen der vorhergehenden Ansprüche, wobei das mit einer Phospholipase in Kontakt zu bringende Fleisch Hackfleisch ist.

6. Verfahren nach einem beliebigen der vorhergehenden Ansprüche, wobei das Nahrungsmittelprodukt ein emulgiertes Fleischprodukt ist.

7. Verfahren nach einem beliebigen der vorhergehenden Ansprüche, wobei das Nahrungsmittelprodukt mindestens 30 % Fleisch umfasst.

8. Verfahren nach einem beliebigen der vorhergehenden Ansprüche, wobei die Phospholipase eine gereinigte Phospholipase ist.

9. Verfahren nach einem beliebigen der vorhergehenden Ansprüche, wobei die Phospholipide des phospholipasebehandelten Fleischs durch Hydrolyse von mindestens 5 % der Gesamtmenge von Phosphatidylcholin plus Phosphatidylethanolamin modifiziert worden sind.

10. Verfahren nach einem beliebigen der vorhergehenden Ansprüche, wobei die Phospholipide des phospholipasebehandelten Fleischs durch Hydrolyse von mindestens 20 % der Gesamtmenge von Phosphatidylcholin plus Phosphatidylethanolamin modifiziert worden sind.

## Revendications

1. Procédé de production d'un produit alimentaire à base de viande comprenant :
a) la mise en contact de la viande avec une phospholipase A₁ ou une phospholipase A₂ ;
b) le chauffage de la viande traitée à la phospholipase ; et
c) la production d'un produit alimentaire à partir de la viande traitée à la phospholipase ;
dans lequel l'étape b) est menée avant, pendant ou après l'étape c).

2. Procédé selon la revendication 1, dans lequel la viande traitée à la phospholipase est chauffée à une température et durant une période suffisante pour inactiver la phospholipase.

3. Procédé selon la revendication 1, dans lequel la viande traitée à la phospholipase est chauffée à au moins 50°C.

4. Procédé selon la revendication 3, dans lequel la viande traitée à la phospholipase est chauffée à une température dans une plage allant de 50 à 140°C.

5. Procédé selon l'une quelconque des revendications précédentes, dans lequel la viande à mettre en contact avec une phospholipase est une viande hachée.

6. Procédé selon l'une quelconque des revendications précédentes, dans lequel le produit alimentaire est un produit de viande émulsifiée.

7. Procédé selon l'une quelconque des revendications précédentes, dans lequel le produit alimentaire comprend au moins 30% de viande.

8. Procédé selon l'une quelconque des revendications précédentes, dans lequel la phospholipase est une phospholipase purifiée.

9. Procédé selon l'une quelconque des revendications précédentes, dans lequel les phospholipides de la viande traitée à la phospholipase ont été modifiés par hydrolyse d'au moins 5% de la quantité totale de phosphatidylcholine plus phosphatidyléthanolamine.

10. Procédé selon l'une quelconque des revendications précédentes, dans lequel dans lequel les phospholipides de la viande traitée à la phospholipase ont été modifiés par hydrolyse d'au moins 20% de la quantité totale de phosphatidylcholine plus phosphatidyléthanolamine.
